# FASCICULE DE BREVET EUROPEEN

(11) **EP 3 153 328 B1**
(45) Date de publication et mention de la délivrance du brevet: **19.06.2019**
(21) Numéro de dépôt: 16187164.5
(22) Date de dépôt: 05.09.2016
(51) Int. Cl.: B60B 7/00, B60B 7/04, B60B 7/06, B60B 7/08

(54) **INSERT TURBINE POUR ROUE DE VEHICULE**
TURBINENEINSATZ FÜR FAHRZEUGRAD
TURBINE INSERT FOR A VEHICLE WHEEL

(30) Priorité: 05.10.2015 FR 1559432
(43) Date de publication de la demande: 12.04.2017
(73) Titulaire: PSA Automobiles SA, 78300 Poissy (FR)
(72) Inventeur: PALPACUER, Eric, 75013 PARIS (FR); LAMOULIE, Didier, 92370 CHAVILLE (FR)

(56) Documents cités:
- EP-A1- 2 560 826
- EP-A2- 1 319 526
- DE-A1-102012 208 081

## Description

L'invention porte sur une pièce rapportée, dite « insert turbine », pour une roue de véhicule, en particulier pour une roue dite « structurelle » de véhicule automobile, c'est-à-dire pour une roue qui est de masse optimisée et qui comporte des ajourages importants qui, sans préjudicier à sa tenue mécanique, laisse une grande latitude pour permettre des adaptations ou des personnalisations variées en réponse aux exigences particulières des clients ou usagers du véhicule fabriqué en série.

La présente invention concerne aussi une roue de véhicule, en particulier une roue structurelle de véhicule automobile, équipée d'au moins un tel insert turbine. Elle concerne enfin, un véhicule, en particulier un véhicule automobile, dont les roues sont équipées de tels inserts turbine.

On connaît l'enjoliveur de roue, appelé aussi « chapeau de roue », en matière métallique ou en matière plastique, par exemple en polyamide, qui est placé sur l'extérieur de la partie centrale d'une roue d'un véhicule pour décorer : l'enjoliveur permet « d'habiller » la roue en tôle du véhicule conçue comme structurelle et dépourvue de style.

L'enjoliveur de roue dit « standard » ne présente pas de caractéristiques aérodynamiques optimales, mais essentiellement des caractéristiques de style. Il présente un ajourage relativement important et impacte l'aérodynamique du véhicule.

On connaît également différents types d'enjoliveurs dits « enjoliveurs aérodynamiques », qui permettent de réduire la traînée aérodynamique du véhicule. Ils présentent, contrairement aux enjoliveurs précédents, un ajourage minimal qui a une incidence négative sur le refroidissement des freins.

On connaît aussi des roues ou des enjoliveurs de roue à pièces rapportées, pour réduire la traînée aérodynamique du véhicule ou bien pour permettre des effets décoratifs.

Ainsi, on connaît, selon le document WO 2014/090827 A1, une pièce rapportée appelée « insert » pour une roue de véhicule présentant une pluralité de rayons qui définissent autant de cavités, chaque cavité étant délimitée par deux rayons voisins, successifs, et étant destinée à recevoir un insert. L'insert comporte une surface qui, lorsque la roue tourne, redirige le flux d'air. Cette surface est profilée de manière aérodynamique, de façon à réduire la traînée sur un rayon adjacent de la roue.

On connaît également, selon le document US 6 517 168 B1, un assemblage d'enjoliveur de roue, qui comprend un enjoliveur de roue présentant une surface externe et une pluralité de cavités de turbine espacées de manière circonférentielle à partir de cette surface, au moins un insert interchangeable disposé sur ladite surface externe de l'enjoliveur et adapté pour être monté à l'intérieur d'une cavité de turbine, et des moyens de fixation pour fixer ledit insert interchangeable au moins dans une cavité de turbine. Ces moyens de fixation comprennent des premières pattes d'attache de type « à clipper » sur l'enjoliveur et des secondes pattes d'attache, également de type « à clipper », sur l'insert, ces dernières pouvant être verrouillées de façon amovible sur les premières pattes d'attache de l'enjoliveur.

On notera que ces documents décrivent des pièces rapportées de roues ou d'enjoliveurs de roue, qui n'apportent aucun « effet turbine » réel.

Le document EP-A-2 560 826 divulgue un insert turbine pour roue de véhicule conforme au préambule de la revendication 1.

Le but de la présente invention est de fournir un Insert à effet turbine pour roue de véhicule, en particulier pour roue structurelle de véhicule automobile, qui permette d'optimiser la traînée aérodynamique du véhicule.

Un autre but de la présente invention est de fournir un tel insert turbine, qui apporte un gain en CO₂.

C'est également un but de la présente invention de fournir un tel insert turbine, qui soit solide, efficace, fiable et économique.

Pour parvenir à ces buts, la présente invention a pour objet un insert turbine pour roue de véhicule, en particulier pour roue structurelle de véhicule automobile. La roue comporte, de manière classique, une jante cylindrique, un moyeu et une structure de type à rayons reliant le moyeu à la jante et définissant des ajourages radiaux. L'insert turbine selon l'invention est destiné à être inséré dans un de ces ajourages radiaux de la roue. Cet insert turbine comprend au moins une pale aérodynamique, sensiblement radiale, de section transversale à profil en « aile d'avion », orientée pour déplacer l'air d'un côté de la roue vers l'autre côté de la roue lors de la rotation de cette dernière. Des moyens de positionnement de l'insert turbine sont prévus pour permettre sa mise en position dans un ajourage radial. De plus, des moyens de fixation de l'insert turbine sont prévus pour permettre la fixation de ce dernier en position dans l'ajourage radial de la roue.

Selon un mode préféré de réalisation de l'invention, l'insert turbine selon la présente invention comporte deux pales aérodynamiques, sensiblement radiales, de section transversale à profil en « aile d'avion », orientées pour déplacer l'air d'un côté de la roue vers l'autre côté de la roue lors de la rotation de cette dernière.

Selon l'orientation des pales aérodynamiques, le déplacement d'air causé par la rotation de la roue est un mouvement aspirant, c'est-à-dire un mouvement d'air de la face extérieure de la roue vers la face intérieure de la roue, ou bien un mouvement soufflant, c'est-à-dire un mouvement d'air de la face intérieure de la roue vers la face extérieure de la roue.

Les inserts turbine destinés à être montés sur une des deux roues de gauche du véhicule sont de structure symétrique à celle des inserts turbine destinés à être montés sur une des deux roues de droite du véhicule.

Selon un mode préféré de réalisation de l'invention également, lorsque l'insert turbine est monté dans un ajourage radial de la roue, les pales aérodynamiques peuvent être orientées par rapport au plan orthogonal à l'axe de la roue d'un angle compris entre 2° et 20°, de préférence entre 3° et 13°.

De manière préférentielle, les moyens de positionnement de l'insert turbine pour permettre sa mise en position dans un ajourage radial de la roue sont constitués par une collerette de positionnement, cylindrique, axiale, adjacente à la périphérie externe de l'insert turbine, destinée à s'emboîter dans la surface cylindrique, axiale, périphérique de l'ajourage radial, ladite collerette de positionnement étant prolongée par une rebord radial, périphérique, destiné à faire butée axiale de l'insert turbine en position engagée dans l'ajourage radial de la roue.

De manière préférentielle également, les moyens de fixation de l'insert turbine pour permettre la fixation de ce dernier en position engagée dans l'ajourage radial de la roue sont constitués par l'un des moyens de fixation suivants : colle, vis de fixation, clips de fixation ou tout autre moyen de fixation de fonction similaire, connu en soi.

De préférence, la surface périphérique interne de la collerette de positionnement est sensiblement inclinée vers l'intérieur de la roue lorsque l'insert turbine est monté sur cette dernière, de manière à former un déflecteur sur le pourtour interne de l'insert turbine qui concentre et dirige le flux d'air dans l'ajourage radial correspondant de la roue.

Avantageusement, la section des pales aérodynamiques de l'insert turbine est à profil en « aile d'avion » de type « CLARK Y ».

La présente invention a aussi pour objet une roue de véhicule, en particulier une roue structurelle de véhicule automobile, présentant une jante cylindrique, un moyeu et une structure de type à rayons reliant le moyeu à la jante et définissant une pluralité d'ajourages, ladite roue, nouvelle, comportant au moins un insert turbine conforme à celui décrit ci-dessus dans ses grandes lignes.

Selon un mode préféré de réalisation, les ajourages radiaux de la roue selon l'invention sont identiques et au nombre de cinq, et chaque ajourage radial reçoit un insert turbine conforme à celui décrit précédemment dans ses grandes lignes.

La présente invention a enfin pour objet un véhicule, en particulier un véhicule automobile, dans lequel au moins une des roues est conforme à celle mentionnée ci-dessus.

D'autres buts, avantages et caractéristiques de l'invention apparaîtront dans la description qui suit d'un exemple de réalisation, non limitatif de l'objet et de la portée de la présente demande de brevet, accompagnée de dessins dans lesquels :
- la figure 1 est une vue en perspective, schématique, d'une roue de véhicule automobile, de type roue structurelle,
- la figure 2 est une vue en perspective, schématique, de la roue de la figure 1, sur laquelle sont montés des inserts turbine conformes à l'insert turbine selon la présente invention,
- la figure 3 est une vue en perspective, schématique, d'un insert turbine selon la présente invention, représenté seul, non monté sur une roue de véhicule,
- la figure 3A est une vue en coupe transversale, schématique, selon le plan de coupe BB de la figure 3, d'un insert turbine selon l'invention, montrant l'orientation des pales aérodynamiques,
- la figure 4 est une vue en perspective, schématique, de l'insert turbine de la figure 3, selon un autre angle de vue permettant de montrer les moyens de son positionnement dans un ajourage radial de la roue,
- la figure 5 est une demie vue, en coupe radiale, schématique, d'un insert turbine selon l'invention monté sur une roue de véhicule, et
- la figure 6 est un schéma illustrant la section transversale d'une pale d'enjoliveur en forme « d'aile d'avion » de l'insert turbine, lequel schéma représente les zones de surpression et de dépression lorsque l'insert turbine est en rotation solidaire de la roue sur laquelle il est monté.

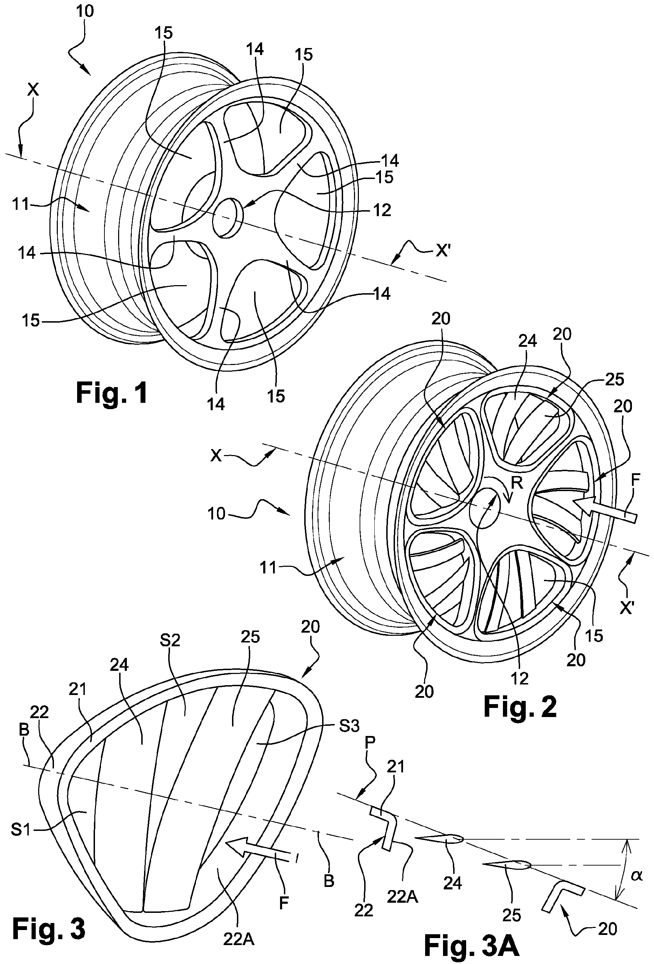

En référence au dessin de la figure 1, on a représenté une roue structurelle droite de véhicule automobile, qui est d'axe XX' et qui est désignée par la référence générale 10. Cette roue 10 est, de manière classique, constituée principalement de trois parties :
- le moyeu, désigné par la référence 12, disposé au centre de la roue, qui assure le guidage en rotation de cette dernière par rapport au châssis du véhicule,
- la jante, désignée par la référence 11, qui est située à la périphérie et sur laquelle se fixe la bande de roulement rapportée, et
- la structure, qui est composée de rayons reliant le moyeu 12 à la jante 11. Ces rayons, qui s'étendent radialement entre le moyeu 12 et la jante 11, sont désignés collectivement par la référence numérique 14.

La structure à rayons 14 définit des ajourages radiaux, sensiblement en secteurs circulaires, désignés collectivement par la référence 15.

A titre d'exemple non limitatif de l'objet et de la portée de la présente invention, la roue structurelle 10 présente une structure à cinq rayons 14 angulairement équidistantes, par conséquent à cinq ajourages radiaux 15 identiques.

Selon le principe même de la présente invention, et en référence au dessin de la figure 2, des pièces rapportées, dites « inserts turbine », désignées collectivement par la référence numérique 20, sont montées dans les ajourages radiaux 15 de la roue 10.

Comme représenté sur les dessins des figures 2, 3 et 4, chaque insert turbine 20 comprend deux pales aérodynamiques 24 et 25, sensiblement radiales, de section à profil en « aile d'avion ». Les inserts turbine 20 équipés de ces pales aérodynamiques 24, 25 aspirent ou soufflent (en fonction de l'orientation et du type des pales) l'air au travers de la roue 10 (figure 2) de façon à améliorer le sillage latéral de la roue. L'écoulement est ainsi plus « propre » et moins tourbillonnaire sur les flancs du véhicule.

Comme représenté sur le dessin de la figure 3A, la section transversale des pales aérodynamiques 24 et 25 est orientée par rapport au plan principal « P » de l'insert turbine 20, et par conséquent par rapport au plan principal de la roue 10 lorsque l'insert est monté sur cette dernière, comme représenté sur la figure 2. Cette orientation est illustrée par l'angle d'inclinaison « α ».

L'angle « α » d'inclinaison des pales aérodynamiques 24 et 25 par rapport au plan principal « P » de l'insert turbine peut être avantageusement compris entre 2° et 20°, de préférence entre 3° et 13°.

Dans l'exemple ici décrit, les deux pales aérodynamiques 24 et 25 sont orientées pour aspirer l'air (sens de la flèche « F » des figures 2 et 3) lors de la rotation de la roue 10 dans le sens des aiguilles d'une montre (sens de la flèche « R » de la figure 2). Par mouvement aspirant, on entend un mouvement d'air de la face extérieure de la roue 10 vers la face intérieure de la roue 10, par conséquent le mouvement illustré par la flèche « F » des figures 2 et 3.

En variante, les deux pales aérodynamiques 24 et 25 peuvent être orientées inversement de façon à souffler l'air lors de la rotation de la roue 10 dans le sens des aiguilles d'une montre. Par mouvement soufflant, on entend un mouvement d'air de la face intérieure de la roue 10 vers la face extérieure de la roue 10, c'est-à-dire un mouvement en sens inverse de celui illustré par la flèche « F » des figures 2 et 3.

Les deux pales aérodynamiques 24 et 25 définissent à l'intérieur de l'insert turbine 20 trois parties d'ajourage désignées, comme on peut le voir sur le dessin de la figure 3, par les références S1, S2 et S3. Il importe de noter que ces trois parties d'ajourage S1, S2 et S3 doivent idéalement être identiques pour permettre le bon fonctionnement de l'aspiration ou du soufflement de l'air.

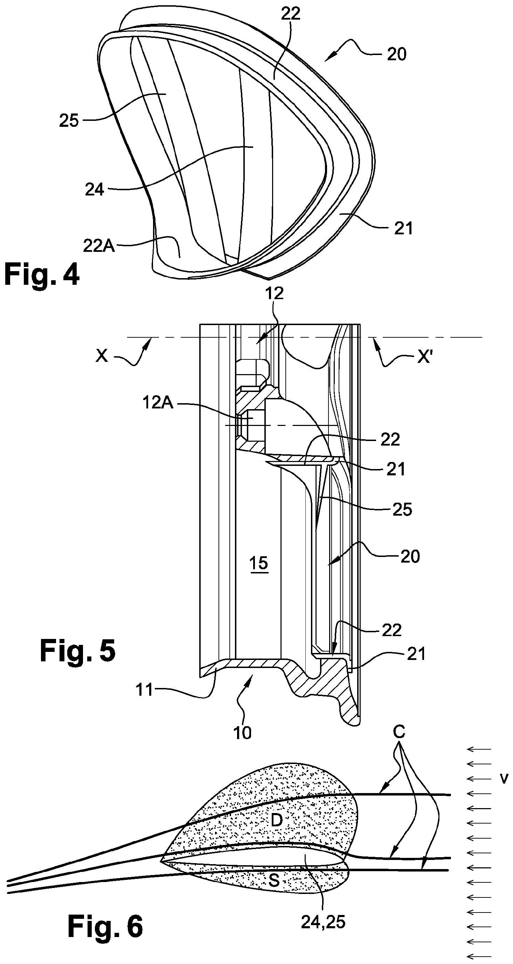

Afin de permettre son positionnement dans un ajourage radial 15 de la roue 10, comme cela est représenté sur le dessin de la figure 2, l'insert turbine 20 présente une structure qui est décrite ci-après en référence aux dessins des figures 3, 3A et 4. Cette structure de l'insert turbine 20 comporte une collerette de positionnement 22, cylindrique, axiale, adjacente à la périphérie externe de l'insert, qui est destinée à s'emboîter dans la surface cylindrique de la paroi périphérique interne d'un des ajourages radiaux 15 représentés sur les figures 1 et 2. De plus, la collerette de positionnement 22 est prolongée par un rebord radial 21, périphérique, destiné à faire butée axiale de l'insert turbine 20 dans la position axiale d'engagement dans ledit ajourage radial 15 représentée sur le dessin de la figure 2.

De manière préférentielle, la surface périphérique interne 22A (figures 3, 3A et 4) de la collerette de positionnement 22 est sensiblement inclinée vers l'intérieur de la roue 10 lorsque l'insert turbine 20 est monté sur cette dernière, de manière à former un déflecteur sur le pourtour de l'insert turbine 20 qui concentre et dirige le flux d'air dans l'ajourage radial 15 correspondant de la roue 10. Cette structure inclinée du pourtour interne de l'insert turbine 20 permet d'éviter les turbulences de flux d'air.

La figure 5 est une demie vue, en coupe radiale, schématique, représentant l'insert turbine 20 en position et fixé dans un ajourage radial 15 correspondant de la roue 10. La collerette de positionnement 22 de l'insert turbine 20 est axialement positionnée par insertion et par concordance des formes dans la surface cylindrique interne correspondante dudit ajourage radial correspondant 15, tandis que le rebord radial 21, périphérique, qui prolonge la collerette de positionnement 22, vient en butée axiale contre la face d'entrée du même ajourage radial correspondant 15. Dans cette position, l'insert turbine 20 est fixé par un moyen de fixation connu en soi sur la roue 10. Ce moyen de fixation peut être, à titre d'exemple, l'un des moyens de fixation suivants : colle, vis de fixation ou clips de fixation.

Sur le dessin de la figure 5, la référence 12A désigne un alésage pour le passage d'un boulon de fixation du moyeu 12 de la roue 10 sur le véhicule.

De préférence, le profil en « aile d'avion » des pales aérodynamiques 24 et 25 est un profil de type « CLARK Y », de forme relativement simple, très efficace à petite échelle, qui est représenté de façon très schématique sur le dessin de la figure 3. Le profil « CLARK Y » est un profil aérodynamique particulier, très largement utilisé dans la construction aéronautique et le modélisme.

En variante, le profil en « aile d'avion » des pales aérodynamiques 24 et 25 peut être un profil de type « JOUKOWSKI », ou bien un profil de type « NACA », symétrique ou cambré.

En référence au dessin de la figure 6, on a représenté une section du profil en « CLARK Y » d'une pale aérodynamique d'enjoliveur 24 ou 25 et un flux d'air « v » autour de la pale. Les lignes « C » illustrent les couches laminaires. La zone désignée « D » est une zone de dépression, tandis que la zone désignée « S » est une zone de surpression.

La surpression liée à la pale aérodynamique souffle l'air dans l'ajourage 15 de la roue, l'air est canalisé par la surface périphérique interne 22A formant déflecteur de la collerette de positionnement 22.

L'insert turbine 20 pour roue de véhicule décrit ci-dessus dans un mode de réalisation particulier présente de nombreux avantages, parmi lesquels les avantages suivants :
- il permet d'optimiser la traînée aérodynamique du véhicule, et d'avoir, ainsi, l'efficacité aérodynamique d'un enjoliveur « turbine »,
- il permet un gain en CO2 estimé à 1g/Km,
- il rend attractif le style de la roue structurelle obtenue en fonderie classique (ou forgée) en aluminium,
- il permet un refroidissement du frein optimisé par le flux d'air généré,
- il permet une personnalisation de la roue, parce que sur une même roue peuvent être « déclinés » divers inserts turbine d'aérodynamique et de style différents, et
- il est économique, d'une part parce qu'un set d'inserts turbine dédié à une roue présente un coût de revient sensiblement identique à celui d'un enjoliveur standard, et d'autre part, parce que le coût de l'outillage de fabrication des inserts est sensiblement le même que le coût de l'outillage d'un enjoliveur standard.

## Revendications

1. Insert turbine pour roue de véhicule, en particulier pour roue structurelle de véhicule automobile, ladite roue (10) présentant une jante cylindrique (11), un moyeu (12) et une structure de type à rayons (14) reliant le moyeu (12) à la jante (11) et définissant des ajourages radiaux (15) et l'insert turbine (20) étant destiné à être inséré dans un ajourage radial (15), ledit insert turbine (20) comprenant, d'une part, au moins une pale aérodynamique (24), sensiblement radiale, de section transversale à profil en « aile d'avion », orientée pour déplacer l'air d'un côté de la roue vers l'autre côté de la roue lors de la rotation de cette dernière, et d'autre part, des moyens de positionnement de l'insert turbine (20) pour permettre sa mise en position dans un ajourage radial (15) et des moyens de fixation de l'insert turbine (20) pour permettre la fixation de ce dernier en position dans l'ajourage radial (15), ledit insert turbine (20) étant **caractérisé en ce qu'**il comporte deux pales aérodynamiques (24, 25), sensiblement radiales, de section transversale à profil en « aile d'avion », orientées pour déplacer l'air d'un côté de la roue (10) vers l'autre côté de la roue (10) lors de la rotation de cette dernière.

2. Insert turbine selon la revendication 1, **caractérisé en ce que**, lorsqu'il est monté dans un ajourage radial (15) de la roue (10), les pales aérodynamiques (24, 25) sont orientées par rapport au plan (« P ») orthogonal à l'axe (« XX' ») de la roue (10) d'un angle (« α ») compris entre 2° et 20° d'angle.

3. Insert turbine selon l'une quelconque des revendications 1 et 2, caractérisé en ce lesdits moyens de positionnement de l'insert turbine (20) pour permettre sa mise en position dans un ajourage radial (15) sont constitués par une collerette de positionnement (22), cylindrique, axiale, adjacente à la périphérie externe de l'insert turbine (20), destinée à s'emboîter dans la surface cylindrique, axiale, périphérique de l'ajourage radial (15), ladite collerette de positionnement (22) étant prolongée par un rebord radial (21), périphérique, destiné à faire butée de l'insert turbine (20) en position dans l'ajourage radial (15).

4. Insert turbine selon l'une quelconque des revendications 1 à 3, caractérisé en ce lesdits des moyens de fixation de l'insert turbine (20) pour permettre la fixation de ce dernier en position dans l'ajourage radial (15) sont constitués par l'un des moyens de fixation connus en soi, suivants : colle, vis de fixation, clips de fixation.

5. Insert turbine selon l'une quelconque des revendications 1 à 4, **caractérisé en ce que** la surface périphérique interne (22A) de la collerette de positionnement (22) est sensiblement inclinée vers l'intérieur de la roue (10) lorsque l'insert turbine (20) est monté sur cette dernière, de manière à former un déflecteur sur le pourtour interne de l'insert turbine (20) qui concentre et dirige le flux d'air dans l'ajourage radial (15) correspondant de la roue (10).

6. Insert turbine selon l'une quelconque des revendications 1 à 5, **caractérisé en ce que** la section transversale des pales aérodynamiques (25, 26) présente un profil de type « CLARK Y ».

7. Roue de véhicule, en particulier roue de véhicule automobile, de type roue structurelle, présentant une jante cylindrique (11), un moyeu (12) et une structure de type à rayons (14) reliant le moyeu (12) à la jante (11) et définissant une pluralité d'ajourages radiaux (15), ladite roue étant **caractérisée en ce qu'**elle comporte, de plus, au moins un insert turbine (20) conforme à l'une quelconque des revendications précédentes.

8. Roue de véhicule, en particulier de véhicule automobile, selon la revendication 8, **caractérisé en ce que** les ajourages radiaux (15) sont identiques et au nombre de cinq, et **en ce que** chaque ajourage radial (15) reçoit un insert turbine (20) conforme à l'une quelconque des revendications 1 à 5.

9. Véhicule, en particulier véhicule automobile, **caractérisé en ce qu'**au moins une de ses roues est conforme à l'une quelconque des revendications 7 et 8.

## Patentansprüche

1. Turbineneinsatz für Fahrzeugrad, insbesondere für ein Kraftfahrzeug-Strukturrad, wobei das Rad (10) eine zylindrische Felge (11), eine Nabe (12) und eine Struktur vom Typ mit Speichen (14) aufweist, die die Nabe (12) mit der Felge (11) verbindet und radiale Durchbrüche (15) definiert, und wobei der Turbineneinsatz (20) einerseits mindestens eine aerodynamische Schaufel (24), die im Wesentlichen radial ist, mit Querschnitt mit "Flugzeugflügel"-Profil umfasst, die ausgerichtet ist, um die Luft von einer Seite des Rads zu der anderen Seite des Rads bei der Drehung dieses Letzteren zu verlagern, und andererseits Positionierungsmittel des Turbineneinsatzes (20), um sein Positionieren in einem radialen Durchbruch (15) zu erlauben, und Befestigungsmittel des Turbineneinsatzes (20), um das Befestigen dieses Letzteren in Position in dem axialen Durchbruch (15) zu erlauben, Turbineneinsatz (20) **dadurch gekennzeichnet, dass** er zwei aerodynamische Schaufeln (24, 25), die im Wesentlichen radial sind, mit Querschnitt in "Flugzeugflügel"-Profil umfasst, die ausgerichtet sind, um die Luft von einer Seite des Rads (10) zu der anderen Seite des Rads (10) bei der Drehung dieses Letzteren zu verlagern.

2. Turbineneinsatz nach Anspruch 1, **dadurch gekennzeichnet, dass**, wenn er in einem radialen Durchbruch (15) des Rads (10) montiert ist, die aerodynamischen Schaufeln (24, 25) bezüglich der Ebene ("P") orthogonal zu der Achse ("XX") des Rads (10) um einen Winkel ("α"), der zwischen 2 und 20 Winkelgrad liegt, ausgerichtet sind.

3. Turbineneinsatz nach einem der Ansprüche 1 und 2, **dadurch gekennzeichnet, dass** die Positionierungsmittel des Turbineneinsatzes (20) zum Erlauben seines Positionierens in einem radialen Durchbruch (15) aus einem zylindrischen, axialen Positionierungsbund (22) benachbart zu dem Außenumfang des Turbineneinsatzes (20) bestehen, der dazu bestimmt ist, in die zylindrische, axiale, umfängliche Oberfläche des radialen Durchbruchs (15) einzurasten, wobei der Positionierungsbund (22) durch einen radialen umfänglichen Rand (21) verlängert ist, der dazu bestimmt ist, den Anschlag des Turbineneinsatzes (20) in Position in dem radialen Durchbruch (15) zu bilden.

4. Turbineneinsatz nach einem der Ansprüche 1 bis 3, **dadurch gekennzeichnet, dass** die Befestigungsmittel des Turbineneinsatzes (20) zum Erlauben des Befestigens dieses Letzteren in Position in dem radialen Durchbruch (15) aus einem der folgenden als solche bekannten Befestigungsmittel bestehen: Klebstoff, Befestigungsschraube, Befestigungsclips.

5. Turbineneinsatz nach einem der Ansprüche 1 bis 4, **dadurch gekennzeichnet, dass** die innere umfängliche Oberfläche (22A) des Positionierungsbunds (22) erheblich zu dem Inneren des Rads (10) geneigt ist, wenn der Turbineneinsatz (20) auf dieses Letztere montiert ist, so dass ein Ablenker auf dem Innenumfang des Turbineneinsatzes (20) gebildet wird, der den Luftstrom in den radialen Durchbruch (15), der dem Rad (10) entspricht, konzentriert und lenkt.

6. Turbineneinsatz nach einem der Ansprüche 1 bis 5, **dadurch gekennzeichnet, dass** der Querschnitt der aerodynamischen Schaufeln (25, 26) ein Profil vom Typ "CLARK Y" bildet.

7. Fahrzeugrad, insbesondere Kraftfahrzeugrad, vom Strukturradtyp, das eine zylindrische Felge (11), eine Nabe (12) und eine Struktur vom Typ Speichen (14) aufweist, die die Nabe (12) mit der Felge (11) verbindet und eine Mehrzahl radialer Durchbrüche (15) definiert, Rad **dadurch gekennzeichnet, dass** es außerdem mindestens einen Turbineneinsatz (20) nach einem der vorstehenden Ansprüche umfasst.

8. Fahrzeugrad, insbesondere eines Kraftfahrzeugs, nach Anspruch 8, **dadurch gekennzeichnet, dass** die radialen Durchbrüche (15) identisch sind und in einer Anzahl von fünf vorliegen, und dass jeder radiale Durchbruch (15) einen Turbineneinsatz (20) nach einem der Ansprüche 1 bis 5 erhält.

9. Fahrzeug, insbesondere Kraftfahrzeug, **dadurch gekennzeichnet, dass** mindestens eines seiner Räder einem der Ansprüche 7 und 8 entspricht.

## Claims

1. A turbine insert for a vehicle wheel, in particular for a structural wheel of a motor vehicle, said wheel (10) having a cylindrical rim (11), a hub (12) and a structure of the type with spokes (14) connecting the hub (12) to the rim (11) and defining radial cut-outs (15) and the turbine insert (20) being intended to be inserted in a radial cut-out (15), said turbine insert (20) including, on the one hand, at least one aerodynamic blade (24), which is substantially radial, with a cross-section having an "aeroplane wing" profile, oriented to displace the air from one side of the wheel towards the other side of the wheel during the rotation of the latter, and, on the other hand, means for positioning of the turbine insert (20) so as to permit its placing in position in a radial cut-out (15), and means for fixing the turbine insert (20) so as to permit the fixing of the latter in position in the radial cut-out (15), said turbine insert (20) being **characterized in that** it comprises two aerodynamic blades (24, 25), which are substantially radial, with a cross-section having an "aeroplane wing" profile, oriented to displace the air from one side of the wheel (10) towards the other side of the wheel (10) during the rotation of the latter.

2. The turbine insert according to Claim 1, **characterized in that**, when it is mounted in a radial cut-out (15) of the wheel (10), the aerodynamic blades (24, 25) are oriented with respect to the plane ("P") orthogonal to the axis ("XX") of the wheel (10) by an angle ("α") comprised between an angle of 2° and 20°.

3. The turbine insert according to any one of Claims 1 and 2, **characterized in that** said positioning means of the turbine insert (20) so as to permit its placing in position in a radial cut-out (15) are constituted by a positioning flange (22) which is cylindrical, axial, adjacent to the external periphery of the turbine insert (20), intended to fit in the cylindrical, axial, peripheral surface of the radial cut-out (15), said positioning flange (22) being extended by a radial peripheral edge (21), intended to abut the turbine insert (20) in position in the radial cut-out (15) .

4. The turbine insert according to any one of Claims 1 to 3, **characterized in that** said fixing means of the turbine insert (20) so as to permit the fixing of the latter in position in the radial cut-out (15) are constituted by one of the following fixing means known per se: glue, fixing screws, fixing clips.

5. The turbine insert according to any one of Claims 1 to 4, **characterized in that** the internal peripheral surface (22A) of the positioning flange (22) is substantially inclined towards the interior of the wheel (10) when the turbine insert (20) is mounted on the latter, so as to form a deflector on the internal periphery of the turbine insert (20) which concentrates and directs the flow of air in the corresponding radial cut-out (15) of the wheel (10).

6. The turbine insert according to any one of Claims 1 to 5, **characterized in that** the cross-section of the aerodynamic blades (25, 26) has a profile of the "CLARK Y" type.

7. A vehicle wheel, in particular a motor vehicle wheel, of the structural wheel type, having a cylindrical rim (11), a hub (12) and a structure of the type with spokes (14) connecting the hub (12) to the rim (11) and defining a plurality of radial cut-outs (15), said wheel being **characterized in that** it comprises, in addition, at least one turbine insert (20) according to any one of the preceding claims.

8. The vehicle wheel, in particular of a motor vehicle, according to Claim 8, **characterized in that** the radial cut-outs (15) are identical and five in number, and **in that** each radial cut-out (15) receives a turbine insert (20) according to any one of Claims 1 to 5.

9. A vehicle, in particular a motor vehicle, **characterized in that** at least one of its wheels is in accordance with any one of Claims 7 and 8.
